# EUROPEAN PATENT APPLICATION

(11) **EP 1 480 014 A2**
(43) Date of publication of application: **24.11.2004**
(21) Application number: 04009644.8
(22) Date of filing: 23.04.2004
(51) Int. Cl.: G01D 5/249

(54) **Device and method for determining the position of a movable object**

(30) Priority: 20.05.2003 IT to20030365
(71) Applicant: C.R.F. Società Consortile per Azioni, 10043 Orbassano (Torino) (IT)
(72) Inventor: Zvezdine, Konstantin, 10043 Orbassano (Torino) (IT); Martorana, Brunetto, 10043 Orbassano (Torino) (IT); Zvezdine, Anatolii, 10043 Orbassano (Torino) (IT); Pullini, Daniele, 10043 Orbassano (Torino) (IT); Lambertini, Vito, 10049 Giaveno (Torino) (IT); Perlo, Piero, 12048 Sommariva del Bosco (IT)
(74) Representative: Marchitelli, Mauro

(57) **Abstract**

A device for determining the position of a movable object (10) along a path of motion, comprising:
- a coded magnetic element (14) provided with a plurality of coded segments (16), each of which has a unique identification code, and
- a sensor element (20) so positioned as to recognise the code of the coded sector (16) which is positioned in correspondence with the sensor element (20).

## Description

The present invention relates to a device and a method for determining the position of an object able to move along a path of motion. More specifically, the invention relates to a device and a method for determining with precision the absolute position of an object independently of whether the object is stationary or moving at the time of the observation and independently of the direction of motion along the path.

Linear position sensors are amply known for sensing the position of objects in commercial and industrial products and systems. Said sensors can be incremental or absolute, with or without contact and with various cost and performance characteristics.

Some documents, representative of the state of the art, are the following: US-A-5632916, US-A-5539993, US-A-4701615, US-A-4901073, US-A-4633224, WO-A-9501510 and US-A-6147342. Prior art solutions are hampered by several drawbacks, such as the need for an incremental scale to determine the absolute position of the movable object, the need to have both an incremental scale and an absolute scale, directional limitations, lack of precision and the need for the object to be moving in order to determine the position.

The position measuring device described in the document US-A-6147342, to measure the absolute position of the rod of a cylinder requires the formation of marks on the surface of the movable object in chemical fashion, or the inclusion of a material in the surface or the etching of marks on the rod of the cylinder using a laser or other devices, or the application of characteristics with detectable capabilities to the marks or to the rod. All these marking method require changes to the superficial geometry of the object and it is impossible to change the precision and/or the operating field after the device is produced.

The object of the present invention is to provide a device and a method for determining the position of a movable object, which overcomes one or more of the problems set out above.

According to the present invention, said object is achieved by a device and by a method having the characteristics set out in the claims.

The present invention shall now be described in detail with reference to the accompanying drawings, provided purely by way of non limiting example, in which:
- Figure 1 is a schematic view showing the operating principle of the present invention,
- Figures 2-6 and 7a, 7b schematically show various applications of a device according to the present invention.

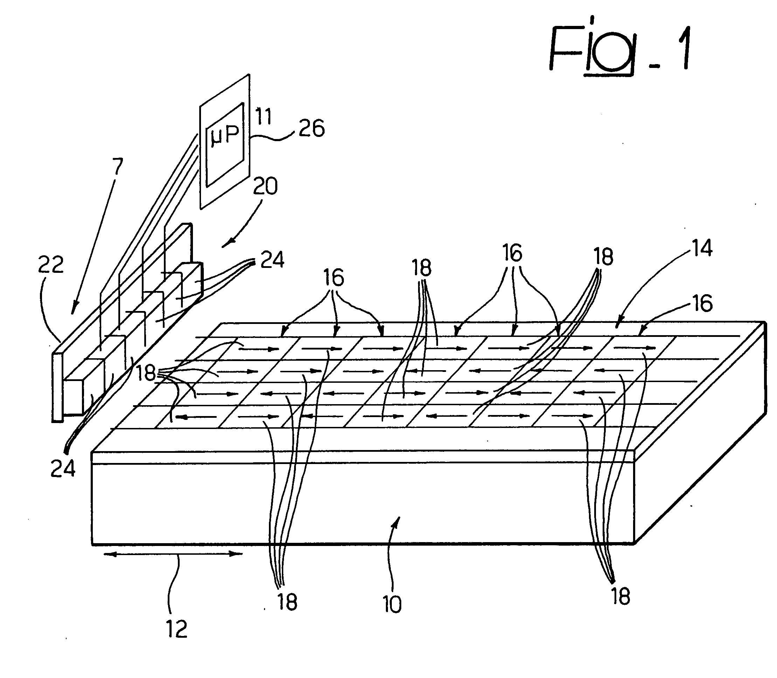

Figure 1 schematically shows an embodiment of a device according to the present invention for determining the absolute position of an object able to move along a path of motion. In Figure 1 the movable object is designated by the reference number 10. In the example illustrated in the figure, the object 10 is movable along a rectilinear direction indicated by the double arrow 12.

A coded magnetic element 14 is integral with the movable object 10. The coded magnetic element 14 can be applied to the surface of the movable object 10 or it can be integrated therewith.

The coded magnetic element 14 comprises a plurality of coded segments 16. Each coded segment has a unique magnetic identification code. Each coded segment 16 is formed by a plurality of magnetised elementary units 18. Each elementary unit 18 has a direction of magnetisation schematically represented by an arrow in Figure 1 which denotes a binary character 1 or 0. The set of the binary characters of the elementary units 18 of each segment 16 forms a unique binary code, characteristic of each segment 16. The binary magnetic code of each segment 16 is uniquely correlated to the position 16 on the movable object 10.

The coded magnetic element 14 constitutes a coding system that allows to determine the absolute position of the movable object 10 along the path of motion 12. The magnetised segments 16 are identified by a respective binary code in which the binary characters 1 and 0 are represented in the elementary units 18 with magnetisation directions oriented at 0° or 180° with respect to a direction of reference. For example, the magnetised elementary units 18 can have its own main direction of magnetisation parallel or anti-parallel with respect to the direction of motion 12.

The dimension of the magnetised elementary units 18 is known and fixed. The dimension of the magnetised elementary units 18 influences the degree of precision reachable to determine the position of the movable object 10. The greater the size of the elementary units 11, the lesser will be the precision achievable to determine the position.

The device for determining the position of the movable object comprises a sensor element 20 borne by a fixed structure 22 and located in such a position with respect to the coded magnetic element 14 as to be able to determine the magnetic orientation of the magnetised elementary units 18. The sensor element 20 comprises an array of n sensing units 24, each of which senses the magnetic orientation of a respective component of the magnetic code of the coded segments 16. The sensing units 24 of the sensor element 20 sense the magnetic field of the elementary magnetic units 18 and generate respective signals, representative of the magnetic code. Said signals are sent to a processing device 26 constituted for example by a processor that determines the binary code of the coded sector 16 which on each occasion is located at the sensor element 20.

The recognition of the binary code by the processor 26 allows uniquely to identify the position of the movable object 10 relative to the sensor element 20. Said determination can be made both when the movable object 10 is stationary, and in conditions of relative motion between the movable object 10 and the sensor element 20. To determine the absolute position of the movable object 10, it is sufficient to read a single magnetic code. To determine the incremental position of the movable object 10, it is sufficient to carry out a reading in a starting position and a reading in a final position.

The sensor element 20 can for example be formed by an array of magneto-resistive sensing units 24. The structure and the operation of the magneto-resistive units 24 is conventional. Preferably, the sensor element 20 is a giant magnetic resistive (GMR) sensor with a number of units that corresponds to the number of binary units in each coded segment 16. GMR sensors are usually formed by at least two thin magnetic layers constituted by different materials. The layers are separated by non magnetic conductive spacers. The electrical conductivity of such structures depends on the direction of relative magnetisation of the magnetic layers. The applied magnetic field changes the magnetisation of one of the layers whilst the magnetisation of the other layer in most cases is fixed. The magnetic field produced by the individual magnetised elementary units 18 thus produces a change in the conductivity of the units 24 of the sensor element 20. As a function of the change in conductivity, a digital signal 0 or 1 is produced, which is sent to the processor 26 which determines the relative position between the movable object 10 and the stationary sensor 20 based on the digital signal read in the sensor element 20.

The coded magnetic element 14 can be constituted by ferromagnetic powders incorporated in a polymeric matrix. The technologies developed for the synthesis of metal/polymer composites can be classified as ex situ methods and in situ methods, depending on the conditions in which the metal filling is produced. In the ex situ method, the polymerisation of the organic monomer and the formation of the metallic particles are performed separately and subsequently the two components are mixed to form the metal/polymer composites. In the in situ method, the monomer is polymerised in solution with metal ions (free or complex ions) introduced before the polymerisation and subsequently the metal ions are reduced by a reducing agent or by heat treatment. This method is faster than the ex situ method, but less efficient since it is not able to produce contactless dispersions of identical particles. The properties of the particles are strictly correlated to their structure (shape, dimensions, composition), therefore the particles must be identical.

One of the suitable methods to prepare the powders entails the use of liquid polyol which acts as a solvent of the metal precursor and as a reducing agent. This method provides mono-dispersed metal particles with well defined morphological characteristics. The main characteristic of this method is that it is possible, acting on the experimental conditions, to control the velocity of precipitation and hence obtain non agglomerated metal particles with a well defined shape, a controlled average dimension in the micrometric or nanometric dimensional field and a straight dimensional distribution.

After the production of the powders, it is important chemically to modify the surface of the particles. An organic layer is strongly chemisorbed on the metal surface and it is extremely useful during the treatment of the composite because it:
decreases the free surface energy of the particles preventing their large scale aggregation,
prevents oxidation and surface contamination effects, preventing the decay of the magnetic properties of the particles,
it enables the dispersion of particles in olygomers before resin curing,
improves the interfacial characteristics of the resulting composite material.

The materials employed can be: thermoplastic polymers, rubbers, heat-hardening polymers. The filling materials can be: hard ferromagnetic materials (for instance cobalt), ferromagnetic alloys such as aluminium-nickel-cobalt, neodymium-iron-boron, iron-chromium-cobalt or other ferromagnetic materials.

The percentage of ferromagnetic particles in the polymer should allow to obtain significant magnetic properties and, on the other hand, allow polymer mixing. To obtain an appropriate orientation of the particles in the polymer, an external magnetic field is applied during the curing of the polymer.

The desired magnetisation distribution can be obtained using various methods. These methods can be:
conventional magnetisation systems for solutions exceeding one hundred µm; methods with multiple steps using materials with magnetic distribution based on porous alumina for resolutions in the order of one hundred nanometres; MFM magnetisation techniques, etc.. Porous alumina has a structure which can be schematically described as a cavity network incorporated in an alumina matrix. Porous alumina can be obtained by an anodisation method on the layer of highly pure aluminium or on an aluminium film on substrates like glass, quartz, silicon, tungsten, etc..

The sensitivity of the device can be changed by changing the structure of the coded magnetic element. It is possible to change the number of the magnetised elementary units 18 in each segment 16 and the dimension of said segments in a direction parallel to the direction of motion of the mobile object. Correspondingly, the number of magneto-resistive sensors 24 is changed.

Some applications of the device according to the present invention in the automotive industry are described below. It is readily apparent that, in addition to the applications described hereafter, the device according to the present invention may be used in different sectors as contactless position sensors, such as actuators, step motors, etc..

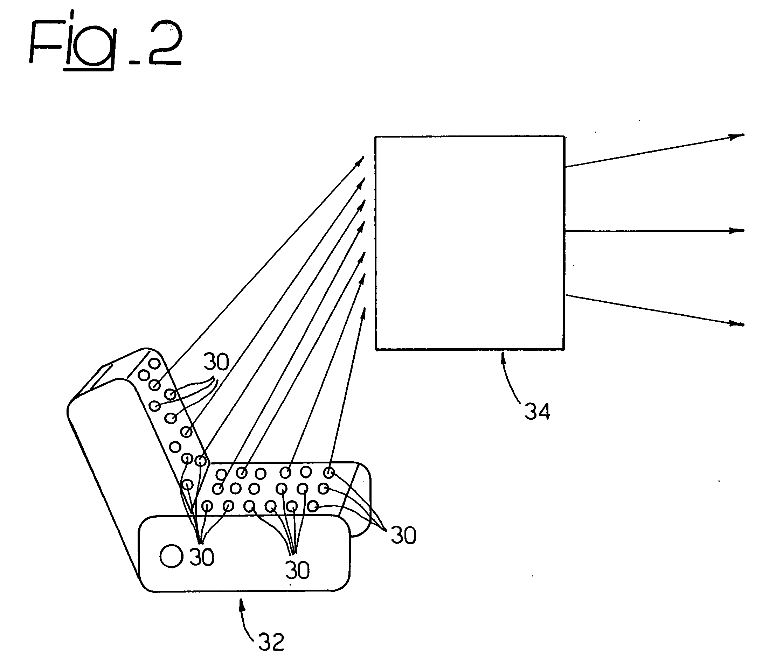

A first application of the device according to the present invention is illustrated in Figure 2 which schematically illustrates a system for recognising the occupancy state of a seat. The system illustrated in Figure 2 provides information on the occupancy state of the seat and on the position of the driver and of the passengers of a vehicle based on the information provided by absolute position sensors 30. The system comprises a matrix of position sensors which provide the pressure distribution over the entire active surface of a seat 32. The pressure sensors 30 are substantially point-like and provide a digital signal which corresponds to the pressure in that point.

Each point-like pressure sensor comprises an element for sensing the absolute position, whose own position is fixed relative to the body of the seat and a coded magnetic element integral with the lining of the seat. The pressure in a given point is determined as a function of the displacement of the coded magnetic element relative to the sensor element.

The lining of the seat can be constituted by shape memory materials, capable of re-establishing the original shape after the vehicle occupant leaves the seat. The pressure distribution can be processed by a processor 34 which outputs information on the position and weight of a person. The information provided by the processor 34 can be sent to the various comfort and safety systems of the vehicle.

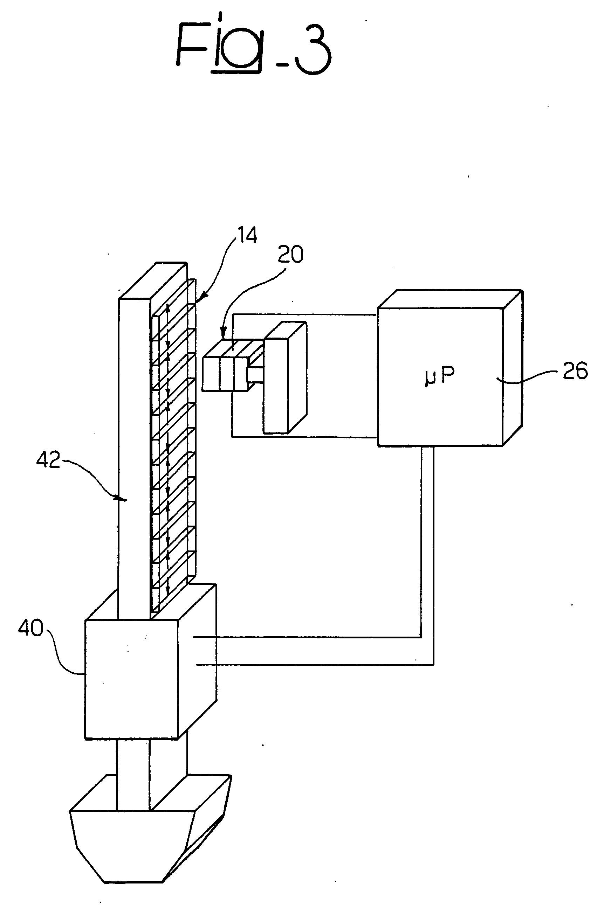

Figure 3 schematically shows the use of a device according to the present invention as a position sensor for an exhaust gas recirculation valve. With reference to this figure, the reference number 40 designates the actuator of the exhaust gas recirculation valve. The stem of the valve is designated by the number 42 and comprises a coded magnetic element 14 facing a stationary sensor element 20. The sensor element 20 sends to a processor 26 the information on the degree of opening of the valve. Based on this information, the processor 26 calculates an optical exhaust recirculation flow ratio to minimise NOX emissions.

An arrangement similar to the one shown in Figure 3 can be used to measure the fuel level in the tank of a vehicle. The fuel level sensor consists of a float whereon is applied or integrated a coded magnetic element that allows to determine the absolute position of the float. Said position is recognised by a contactless magnetic sensor similar to what is described above.

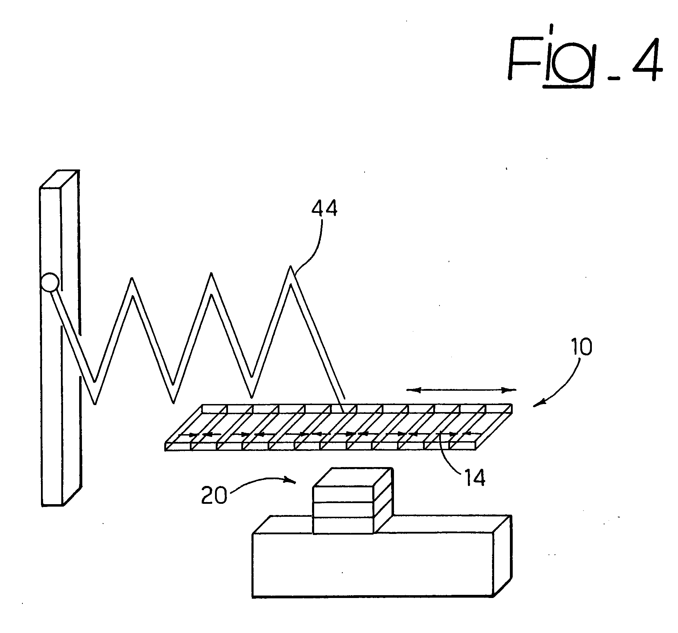

Figure 4 schematically illustrates the use of a device according to the present invention as a magneto-resistive impact sensor. In the example of Figure 4, the movable object 10 is constituted by an acceleration sensitive mass and provided on its surface with a coded magnetic element 14 as described above. The magnetic element 14 faces a stationary sensor element 20. The mass 10 is connected to a spring 44 which maintains the mass 10 in a predetermined position. The sensor 20 senses a frequency of motion when the sensitive mass 10 moves. When the sensitive mass is subjected to a deceleration which creates an inertial force exceeding a predetermined threshold, the output frequency of the sensor element exceeds a predetermined critical value. The illustrated arrangement therefore allows to determine the intensity of an impact to command the intervention of a safety system such as an airbag or a safety bag tensioner.

The advantage of the present invention relative to traditional impact sensors is that the motion of the sensitive mass does not require a finite period of time for the sensitive mass to move from its initial position to its operating position. Another advantage of the present invention is the possibility to use 2D or 3D sensors using springs arranged along two or three directions and magnetic surfaces along two or three mutually orthogonal directions. A system of this kind allows to monitor the position of the sensitive mass in real time allowing the airbag control unit to calculate the speed of the sensitive mass and the direction of its motion. This information is used to optimise intervention time and force.

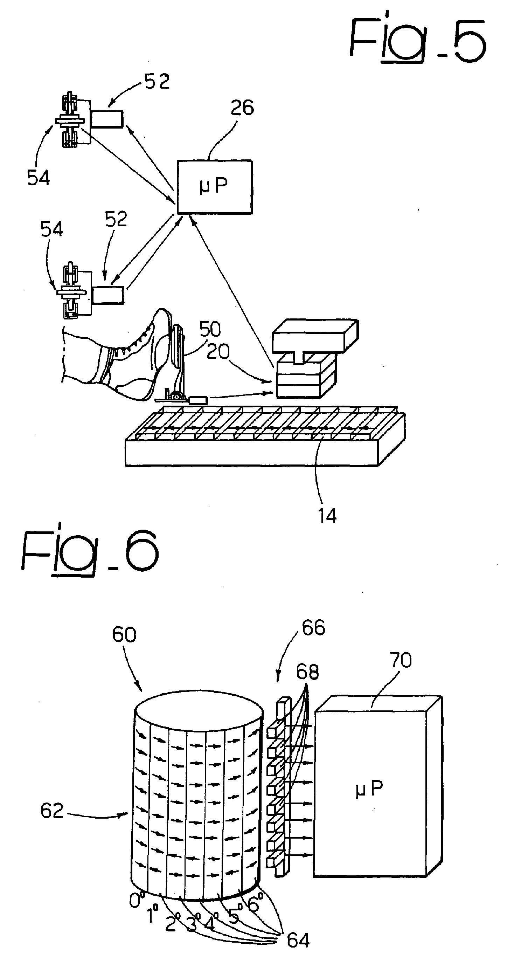

With reference to Figure 5, the device according to the present invention can also be used as a braking control sensor. With reference to Figure 5, the brake pedal of a vehicle is designated by the reference number 50. A sensor element 20 is connected to the pedal 50 and it is movable relative to a coded magnetic element 14 arranged in stationary position. The sensor element 20 provides to a processor 26 a signal indicative of the braking force which the driver wishes to apply. The processor 26 commands actuators 52 associated to the brakes 54 on the basis of the signal provided by the processor 26.

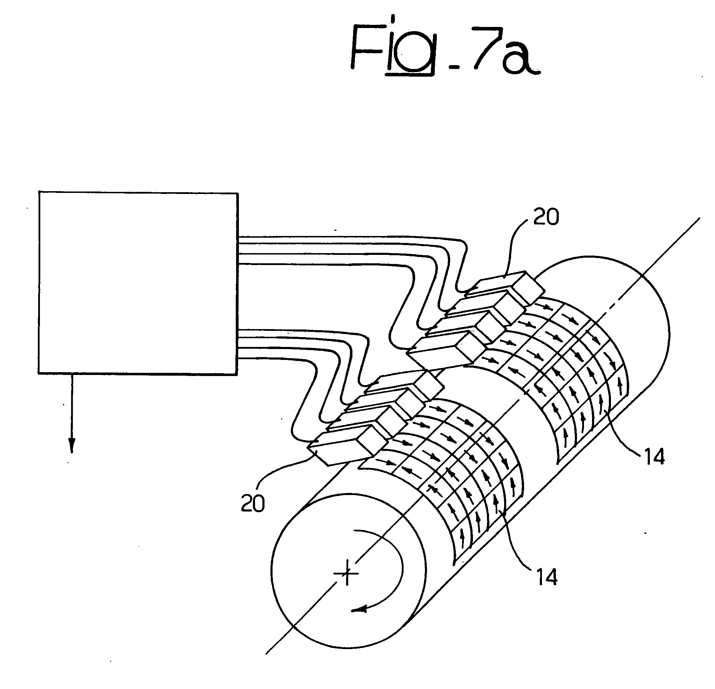

An additional application of the device according to the present invention is schematically shown in Figure 6. In this application, the device according to the invention is used as a sensor of the steering angle of a vehicle. The sensor controls the rate whereat the wheels are steered, to increase or decrease the power provided by the power steering assembly as the case requires. With reference to Figure 6, the steering angle sensor according to the present invention comprises a cylindrical body 60 rotatable around its own longitudinal axis and provided on its outer surface with a coded magnetic element 62 formed by a plurality of coded segments 64 parallel to the axis of the rotatable body 60. Each of the coded sectors 64 is as described above. A stationary sensor 66 faces the outer surface of the rotatable body 60. The sensor 66 comprises a plurality of magneto-resistive elements 68 which sends the information about the read magnetic code to a processor 70.

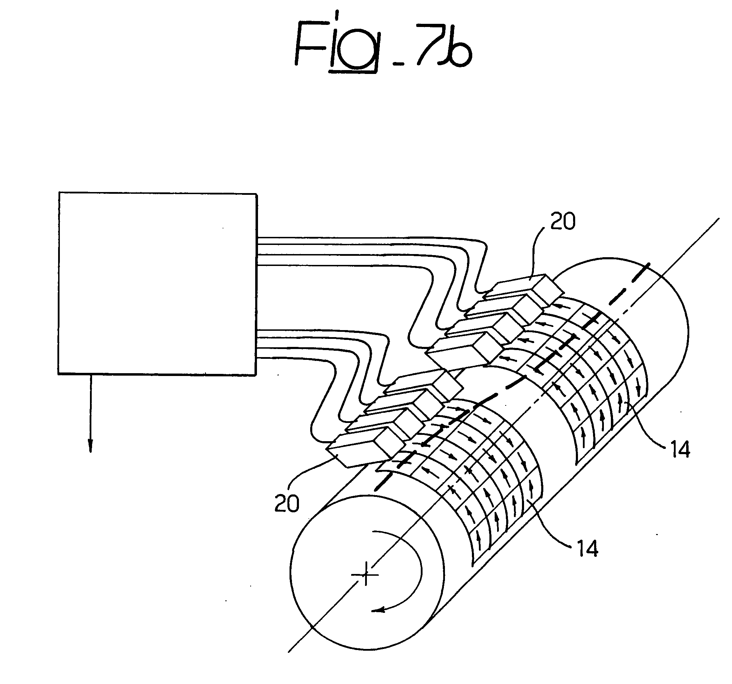

An additional application of the device according to the present invention is shown schematically in Figures 7a and 7b.

The application refers to a system for the diagnostics of the internal combustion engine starting from the measurement of the torsion of the drive and cam shafts. Two or more coded magnetic elements 14 are positioned along the circumference of the shaft in such a way that each individual cell of a first coded element 14 is aligned to the homologous one (whereto corresponds the same binary code) of the second coded magnetic element 14 along an axis that is parallel to the axis of rotation of the shaft in question. To each coded element 14 is associated a magneto-resistive sensor assembly 20 to read the binary code corresponding to the individual cell to identify its position. An electronic unit constantly checks the absolute positions of the homologous individual cells relative to two or more codes, identifying any misalignment. The reading and constant comparison between the two codes constitutes an indirect measurement of the torsion of the shaft.

## Claims

1. A device for determining the position of a movable object (10) along a path of motion, comprising:
- a coded magnetic element (14), provided with a plurality of coded segments (16), each of which has a unique identification code, and
- a sensor element (20) so positioned as to recognise the code of the coded sector (16) that is located correspondence with the sensor element (20).

2. A device as claimed in claim 1, **characterised in that** each coded segment (16) is provided with a plurality of magnetised elementary units (18) which provide respective binary characters according to their main direction of magnetisation, the code of each sector (16) being given by the combination of the binary characters of the elementary units composing the sector.

3. A device as claimed in claim 2, **characterised in that** the sensor element (20) comprises a plurality of sensing units (24) each of which is able to sense the direction of magnetisation of respective elementary units (19) of the coded segments (16).

4. A device as claimed in claim 1, **characterised in that** said coded magnetic element (14) comprises a powder of ferromagnetic material incorporated in a polymeric matrix.

5. A device as claimed in claim 1, **characterised in that** said coded magnetic element (14) is constituted by ferromagnetic material plated with a technique selected among: electroplating, evaporation, simple precipitation in porous matrices obtained by processes of anodisation, electro-etching, photolithography, e-beam lithography, laser ablation, the individual cells being coded during the plating by means of external magnetic field.

6. A device as claimed in claim 4, **characterised in that** the polymeric matrix is constituted by material selected in the group comprising: thermoplastic polymers, rubbers, heat hardening polymers.

7. A device as claimed in claim 4, **characterised in that** the ferromagnetic material is mixed with the polymeric matrix.

8. A device as claimed in claim 4, **characterised in that** the polymeric matrix is polymerised in solution, with metal ions introduced before polymerisation, the metal ions being then reduced by means of a reducing agent or by means of heat treatment.

9. A method for determining the position of a movable object along a path of motion, comprising the steps of:
providing a magnetic element (14) fitted with a
plurality of coded segments (16) each having a unique code for identifying the segment (16), and
reading the unique identification code of the segment that is positioned in correspondence with a sensor element (20).

10. A method as claimed in claim 9, **characterised in that** said sensor element (20) is capable of sensing a series of binary characters of a plurality of elementary magnetic units (18) composing each of said sectors (16).
